# EUROPEAN PATENT SPECIFICATION

(11) **EP 2 557 876 B1**
(45) Date of publication and mention of the grant of the patent: **12.10.2016**
(21) Application number: 11175918.9
(22) Date of filing: 29.07.2011
(51) Int. Cl.: H04W 72/08

(54) **Method and device for allocating time-frequency resources for transmitting data packets**
Verfahren und Vorrichtung zur Zuweisung von Zeitfrequenzressourcen zur Übertragung von Datenpaketen
Procédé et dispositif pour affecter des ressources de temps/fréquence pour la transmission de paquets de données

(43) Date of publication of application: 13.02.2013
(73) Proprietor: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Gresset, Nicolas, 35708 RENNES Cedex (FR); Letessier, Jonathan, 35708 RENNES Cedex 7 (FR)
(74) Representative: Le Guen-Maillet

(56) References cited:
- WO-A1-03/051007
- WO-A1-2006/068445
- US-A1- 2003 179 756
- SEUNGWAN RYU ET AL: "Urgency and efficiency based packet scheduling algorithm for OFDMA wireless system", COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, vol. 4, 16 May 2005 (2005-05-16), pages 2779-2785, XP010825691, DOI: 10.1109/ICC.2005.1494854 ISBN: 978-0-7803-8938-0

## Description

The present invention generally relates to allocating time-frequency resources for data transmissions over a frequency selective fading channel between devices of a communications network.

In a communications network, the transmission of some data packets require meeting some transmission latency constraints, whereas the effective transmission latency is less important for some other data packets.

The former data packets are for instance control packets for the management of the communications network, or data packets related to a real-time application, such as video-streaming. For these data packets, what is important is to meet the latency constraint.

The later data packets are for instance files contents downloaded from or uploaded to a communication device. For these data packets, what is important is to maximize the throughput, in order to reduce the overall transfer time period from the application standpoint.

Generally, in order to take into account these two aspects, a scheduler device schedules the data packets by first serving the latency-constrained data packets to ensure that the latency constraint is met and by then serving the other data packets with the resources that are remaining.

However, in the context of a frequency selective fading channel, this might result in allocating time-frequency resources for transmitting latency-constrained data packets which could have been more appropriately used for transmitting other data packets in order to maximize the throughput for said other data packets. Such frequency selective fading channel may be found in the context of a fixed base station communicating with mobile phones or even in the context of a moving base station, for instance a base station providing telecommunications infrastructure in a train or other moving conveyances.

On the other hand, if the scheduler device schedules the data packets by first serving the data packets that are not latency-constrained, it might result in not meeting the latency constraint for some latency-constrained data packets.

The document "Urgency and Efficiency based Packet Scheduling Algorithm for OFDMA System", Seungwan Ryu et al. IEEE International Conference on Communications, may 2005, discloses a wireless downlink scheduling algorithm for scheduling real time a non-real time traffics.

It is desirable to overcome the aforementioned problems which occur when scheduling transmissions of data packets over a frequency selective fading channel between devices of a communications network.

In particular, it is desirable to provide a solution that allows meeting latency constraints for transmitting latency-constrained data packets, as well as increasing the throughput for other data packets.

It is also desirable to provide a solution that allows meeting latency constraints for transmitting latency-constrained data packets, as well as increasing the throughput for other data packets, when scheduling transmissions of data packets over a frequency and time selective fading channel.

It is also desirable to provide a solution that further allows increasing the execution speed of the time-frequency allocation process.

To that end, the present invention concerns a method for allocating time-frequency resources to data packets for transmitting said data packets via a communications network in which communications are performed over a frequency selective channel, the method being performed by a scheduler device of the communications network, the method comprising: obtaining data packets to be transmitted, or descriptions thereof, each data packet being either a latency-constrained data packet or another data packet. The method is further such that it comprises: obtaining information representative of transmission conditions for each channel over which at least one obtained data packet has to be transmitted; and, for each latency-constrained data packet, determining each candidate time-frequency resource that can be used for transmitting said latency-constrained data packet, on the basis of the obtained information representative of transmission conditions and of a latency constraint associated with said latency-constrained data packet. The method is further such that it comprises at least one iteration of the following steps: allocating at least one time-frequency resource among said candidate time-frequency resources to respective at least one latency-constrained data packet, when the number of at least one time-frequency resource needed for transmitting said at least one latency-constrained data packet is equal to the number of determined candidate time-frequency resources for said at least one latency-constrained data packet; and, reserving at least one time-frequency resource for transmitting respective at least one other data packet, when no candidate time-frequency resource has been allocated to any latency-constrained data packet in the preceding step.

Thus, when the number of time-frequency resources needed for transmitting latency-constrained data packets is equal to the number of determined candidate time-frequency resources for latency-constrained data packets, resources are allocated for transmitting said latency-constrained data packets. Otherwise, resources are reserved for transmitting other data packets, e.g. data packets that are not latency-constrained. Therefore, latency constraints for transmitting latency-constrained data packets are met and the throughput for other data packets is increased.

The aforementioned method is moreover applicable to communications over a frequency selective fading channel, as well as communications over a time and frequency selective fading channel.

According to a particular feature, reserving at least one time-frequency resource for transmitting respective at least one other data packet consists in allocating said at least one time-frequency resource for transmitting said respective at least one other data packet.

Thus, each reserved time-frequency resource is effectively allocated by the scheduler device to another data packet, i.e. a data packet that is not latency-constrained.

According to a particular feature, the method comprises selecting a first set of at least one latency-constrained data packet, the first set having a first cardinality; determining the number of candidate time-frequency resources for said set; selecting a second set of at least one latency-constrained data packet, when the number of candidate time-frequency resources for said first set is greater than the first cardinality; and, allocating, to each latency-constrained data packet of said first set, a time-frequency resource among said candidate time-frequency resources determined for said latency-constrained data packet of said first set, when the number of candidate time-frequency resources for said first set is not greater than the first cardinality.

Thus, the implementation of the method is simple. The method is moreover efficient as a comparison between the number of needed resources and the number of candidate resources is performed for different sets of latency-constrained data packets. Whereas the method already provides throughput improvement when considering a first set of latency-constrained data packets, the improvement is increased when considering a larger number of sets of latency-constrained data packets and when considering discarding a latency-constrained data packet is not acceptable. On the contrary, when considering discarding a latency-constrained data packet is acceptable, for instance depending on priorities associated with the latency-constrained data packets, more freedom is allowed to the time-frequency resources allocation to other data packets, and the throughput is improved for the transmission of said other data packets.

According to a particular feature, the step of selecting a second set comprises a step of selecting a second set with a second cardinality different from the first cardinality.

Thus, the comparison between the number of needed resources and the number of candidate resources may be more accurate or be exhaustive.

According to a particular feature, the method comprises: allocating a time-frequency resource to said one other data packet, when the first cardinality has reached a first predefined threshold; and, selecting the second set with the second cardinality different from the first cardinality, when the first cardinality has not reached the first predefined threshold.

Thus, a trade-off between accuracy of the comparison between the number of needed resources and the number of candidate resources and execution time period of the method may be found. As the probability that resource allocation conflicts occur decreases when increasing the cardinality of the set of latency-constrained data packets under processing, computing resources may be saved.

According to a particular feature, the method comprises: allocating a time-frequency resource to said one other data packet, when a number of times that the step of selecting a second set has been performed has reached a second predefined threshold; and, repeating the step of selecting a second set, when the number of times that the step of selecting a second set has been performed has not reached the second predefined threshold.

Thus, another trade-off between accuracy of the comparison between the number of needed resources and the number of candidate resources and execution time period of the method may be found. It allows limiting the time period of execution of the comparisons with a constrained timeframe.

According to a particular feature, the method comprises, when allocating plural time-frequency resources to plural latency-constrained data packets: allocating, to the latency-constrained data packet with the lowest determined number of candidate time-frequency resources, the candidate time-frequency resource for which said time-frequency resource is candidate for the lowest number of latency-constrained data packets.

Thus, plural time-frequency resources are allocated to plural latency-constrained data packets with no conflicts.

According to a particular feature, the method comprises, when allocating plural time-frequency resources to plural latency-constrained data packets: reserving a candidate time-frequency resource to each latency-constrained data packet; for each latency-constrained data packet, changing the reserved candidate time-frequency resource to another candidate time-frequency resource, when said reserved candidate time-frequency resource is reserved for at least two latency-constrained data packets; allocating the reserved candidate time-frequency resources, when all reserved candidate time-frequency resources are reserved for only one latency-constrained data packet.

Thus, plural time-frequency resources are allocated to plural latency-constrained data packets with no conflicts and low complexity.

According to a particular feature, the method comprises, prior to allocating at least one time-frequency resource to said respective at least one other data packet: updating the candidate time-frequency resources for each latency-constrained data packet, according to the time-frequency resource to be allocated to said one other data packet; cancelling the allocating of the at least one time-frequency resource to said respective at least one other data packet, when the number of at least one time-frequency resource needed for transmitting said at least one latency-constrained data packet is lower than the number of determined candidate time-frequency resources for said at least one latency-constrained data packet; confirming the allocating of the at least one time-frequency resource to said respective at least one other data packet, when the number of at least one time-frequency resource needed for transmitting said at least one latency-constrained data packet is not lower than the number of determined candidate time-frequency resources for said at least one latency-constrained data packet.

Thus, the risks in not meeting the latency constraints for transmitting latency-constrained data packets are avoided, while the throughput for other data packets is further increased.

According to a particular feature, the steps of the method are reiterated when a predefined set of time-frequency resources constituting a frame have been allocated or when an instant at which said frame has to be transmitted is reached.

Thus, the method is reactive to a change in transmission conditions and in variations of the set of data packets to be processed, by dynamically adapting the time-frequency resource allocations on a per frame basis.

According to a particular feature, the method comprises: building, for each latency-constrained packet, a table mapped to a grid representing the time-frequency resources in the time and frequency domains; and, tagging each candidate time-frequency resource of each latency-constrained packet in the respective built table.

Thus, the method is easy to implement by handling such tables.

According to a particular feature, the method comprises limiting the number of candidate time-frequency resources for each latency-constrained packet.

Thus, the complexity and/or the execution time period of the method is reduced.

The present invention also concerns a device for allocating time-frequency resources to data packets for transmitting said data packets via a communications network in which communications are performed over a frequency selective channel, the device comprising: means for obtaining data packets to be transmitted, or descriptions thereof, each data packet being either a latency-constrained data packet or another data packet. The device is further such that it comprises: means for obtaining information representative of transmission conditions for each channel over which at least one obtained data packet has to be transmitted; means for determining, for each latency-constrained data packet, each candidate time-frequency resource that can be used for transmitting said latency-constrained data packet, on the basis of the obtained information representative of transmission conditions and of a latency constraint associated with said latency-constrained data packet; allocating means for allocating at least one time-frequency resource among said candidate time-frequency resources to respective at least one latency-constrained data packet, said allocating means being implemented when the number of at least one time-frequency resource needed for transmitting said at least one latency-constrained data packet is equal to the number of determined candidate time-frequency resources for said at least one latency-constrained data packet; reserving means for reserving at least one time-frequency resource for transmitting respective at least one other data packet, said reserving means being implemented when no candidate time-frequency resource has been allocated to any latency-constrained data packet in the preceding implementation of the allocating means.

The present invention also concerns, in at least one embodiment, a computer program that can be downloaded from a communication network and/or stored on a medium that can be read by a computer and run by a processor. This computer program comprises instructions for implementing the aforementioned method in any one of its various embodiments, when said program is run by the processor.

The present invention also concerns an information storage means, storing a computer program comprising a set of instructions that can be run by a processor for implementing the aforementioned method in any one of its various embodiments, when the stored information is read by a computer and run by a processor.

Since the features and advantages related to the device and to the computer program are identical to those already mentioned with regard to the aforementioned method, they are not repeated here.

The characteristics of the invention will emerge more clearly from a reading of the following description of an example of embodiment, said description being produced with reference to the accompanying drawings, among which:
Fig. 1 schematically represents an architecture of a wireless communications network in which the present invention may be implemented;
Fig. 2A schematically represents an architecture of a communication terminal of the wireless communications network of Fig. 1;
Fig. 2B schematically represents an architecture of a scheduler device of the wireless communications network of Fig. 1;
Fig. 3 schematically represents a time-frequency resource grid for scheduling communications in the wireless communications network of Fig. 1;
Fig. 4A schematically represents an algorithm for determining candidate time-frequency resources for transmitting latency-constrained data packets via the wireless communications network of Fig. 1;
Fig. 4B schematically represents a first algorithm for allocating time-frequency resources to data packets to be transmitted via the wireless communications network of Fig. 1;
Fig. 4C schematically represents a second algorithm for allocating time-frequency resources to data packets to be transmitted via the wireless communications network of Fig. 1;
Fig. 5 schematically represents a third algorithm for allocating time-frequency resources to data packets to be transmitted via the wireless communications network of Fig. 1;
Fig. 6 schematically represents a first algorithm for allocating time-frequency resources to latency-constrained data packets;
Fig. 7 schematically represents a second algorithm for allocating time-frequency resources to latency-constrained data packets.

Although the following description is performed in the scope of a wireless communications network, the principles detailed hereafter may be applied to communications networks of other kind, such as optical communications networks or wired communications network, in which a transmission medium is shared. At physical layer, the transmissions shall however be performed over a frequency selective fading channel, in which channel variations are frequency dependent. In wireless communications networks, such channel variations arise mainly due to multipath effect. The transmissions may also be performed over a time selective fading channel, in which channel variations are time dependent. In wireless communications networks, such channel variations arise mainly due to relative mobility between communication devices, which results in environmental changes.

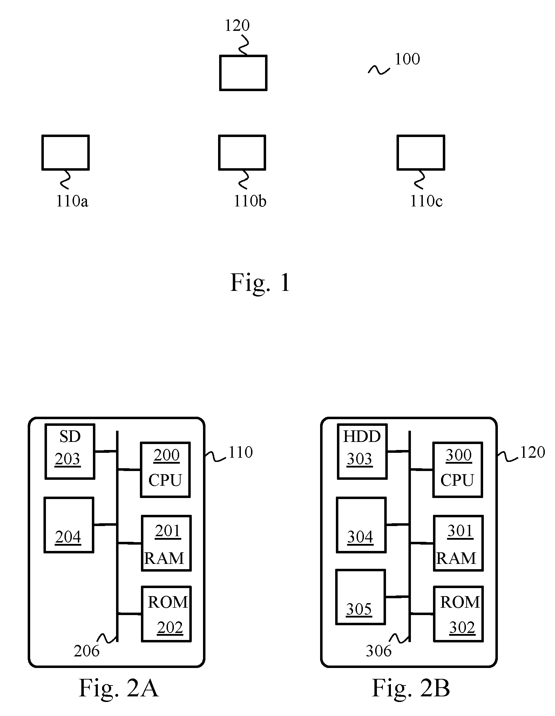

**Fig. 1** schematically represents an architecture of a wireless communications network 100 in which the present invention may be implemented.

The wireless communications network 100 comprises a scheduler device 120 and communication devices 110a, 110b and 110c. The communication devices 110a, 110b and 110c are hereinafter referred to as communication terminals.

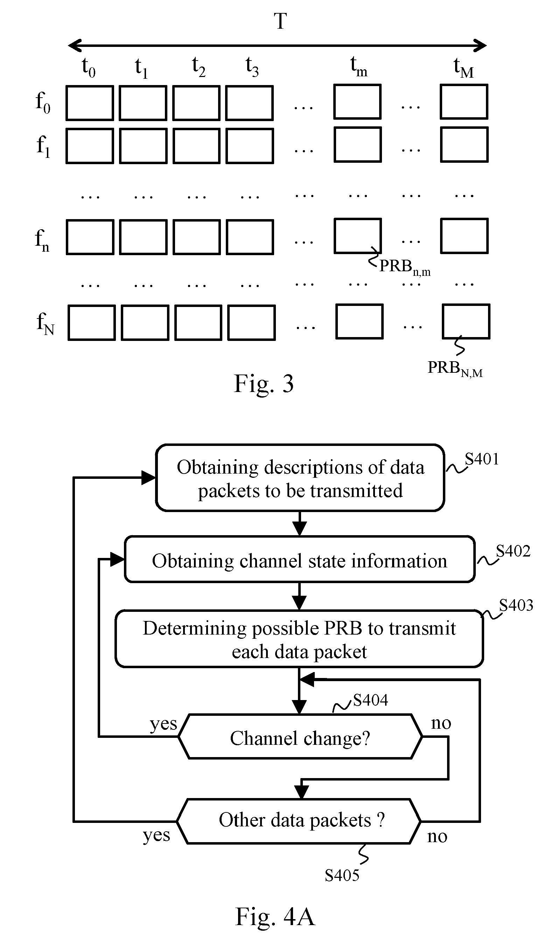

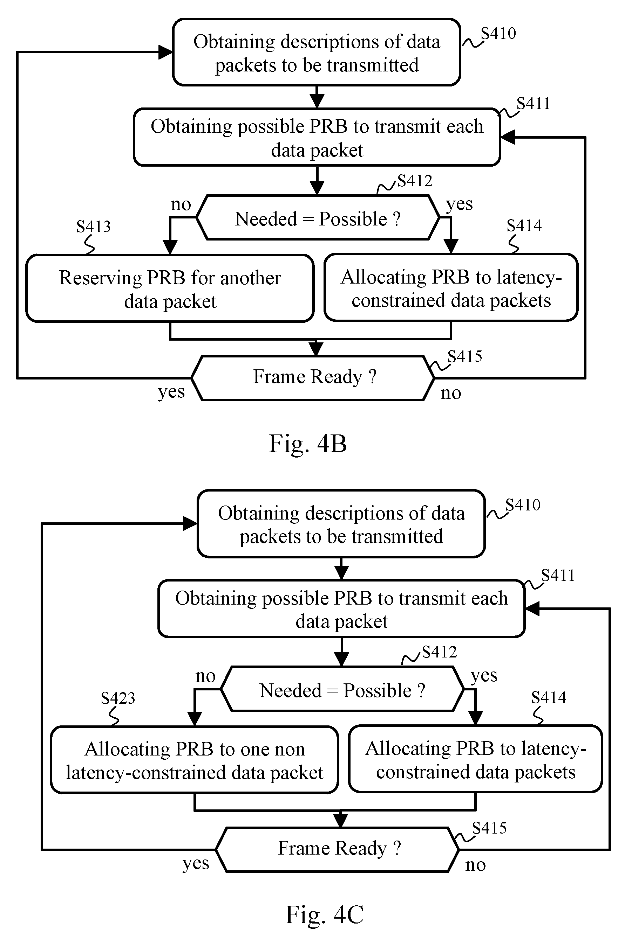

The scheduler device 120 is in charge of scheduling the communications in the wireless communications network 100, as described hereafter with regard to Figs. 4A, 4B and 4C. In other words, the scheduler device 120 is in charge of allocating time-frequency resources for enabling the transmission of data packets via the wireless communications network 100.

The scheduler device 120 may be included in a base station, either fixed or moving. For instance, such a base station may be located in a moving conveyance, such as a train.

In a variant, the scheduler device 120 may be a dedicated device external to such a base station.

In another variant, the scheduler device 120 may be included in an "Evolved NodeB (eNodeB)" according to the 3GPP (3^{rd} Generation Partnership Project) standards terminology, which performs radio resource management in the scope of the LTE (Long Term Evolution) systems and LTE-Advanced.

In yet another variant, the scheduler device 120 may further be included in a "Home eNodeB (HeNB)", which is connected to an existing residential broadband service and provides LTE radio coverage for LTE handsets within a home.

In yet another variant, the scheduler device 120 may be included in a relay node and perform scheduling for inter-devices communications.

Each communication terminal 110a, 110b, 110c is then a user equipment (UE) according to the 3GPP standards terminology.

The data packets transmitted via the wireless communications network 100 are of two main types: latency-constrained data packets and other data packets, i.e. non latency-constrained data packets.

Latency-constrained data packets need to be provided to a destination communication device in a given timeframe. Latency-constrained data packets comprise for instance control data for the management of the wireless communications network 100 or real-time data for gaming applications, VoIP (Voice over Internet Protocol) applications, audio and/or video streaming applications. Latency-constrained data packets are either: of small size but with typically high redundancy ratio to avoid any damageable loss during transmission, such as control data packets; or, of large size but with typically very low redundancy ratio, as losses are not strictly damageable for the overall performance of the application, such as for audio video streaming data packets.

On the contrary, data packets that are not latency-constrained don't need to be provided to a destination communication device in a given timeframe, but generally require a higher number of resources. It is however preferred transmitting such data packets in a timeframe as short as possible. Such data packets that are not latency-constrained comprise for instance files contents data downloaded to or uploaded from a communication terminal. Such data packets that are not latency-constrained are of high size with typically high redundancy ratio to avoid any damageable loss during transmission. Therefore, such data packets involve a high bandwidth consumption.

The communications within the wireless communications network 100 may be downlink communications from the scheduler device 120 to the communication terminals 110a, 110b, 110c and/or uplink communications from the communication terminals 110a, 110b, 110c to the scheduler device 120 and/or direct communications between the communication terminals 110a, 110b, 110c.

The communications within the wireless communications network 100 are scheduled and time-frequency resources are allocated by the scheduler device according to a time-frequency resource grid.

**Fig. 3** schematically represents an example of such a time-frequency resource grid for scheduling communications in the wireless communications network 100.

The communications in the wireless communications network 100 preferably use OFDM (Orthogonal Frequency Division Multiplexing). The communication resources can then be divided into plural frequencies or sets of frequencies fₙ, wherein n = 0 to M, and into plural time intervals tₘ, wherein m = 0 to M, for a time period T. All time intervals tₘ have the same duration.

For instance, according to LTE requirements, each set of frequencies fₙ may consist of twelve subcarriers.

Each time interval tₘ for a given frequency or set of frequencies fₙ forms a time-frequency resource, also referred to as Physical Resource Block PRB_{n,m}. Such time-frequency-resource is generally denoted hereafter PRB.

Therefore, for a given frequency or set of frequencies fₙ, the grid comprises M+1 PRBs, denoted from PRB_{n,0} to PRB_{n,M}; and, for a given time interval tₘ, the grid comprises N+1 PRBs, denoted from PRB_{0,m} to PRB_{N,m}.

The scheduler device 120 schedules data packets of which size is defined according to the duration of each PRB. In other words, each packet has a size allowing its transmission in a PRB under predefined transmission conditions considered as normal transmission conditions. It can also be considered splitting original data packets into plural smaller data packets in order to guarantee that all the split data packets are transmitted within the latency constraint of the original data packet.

It is illustratively considered hereinafter that the latency constraint that can be applied to a latency-constrained data is at most the time period T. If the latency constraint that can be applied to a latency-constrained data is not at most the time period T, the data packet is put aside until the remaining time to meet the latency constraint becomes lower than the time period T.

**Fig. 2A** schematically represents an architecture of a communication terminal 110, which could be any communication terminal 110a, 110b or 110c.

According to the shown architecture, the communication terminal 110 comprises the following components interconnected by a communications bus 206: a processor, microprocessor, microcontroller or CPU (Central Processing Unit) 200; a RAM (Random-Access Memory) 201; a ROM (Read-Only Memory) 202; a SD (Secure Digital) card reader 203, or any other device adapted to read information stored on storage means; and, a wireless communication interface 204.

CPU 200 is capable of executing instructions loaded into RAM 201 from ROM 202 or from an external memory, such as an HDD (Hard-Disk Drive) or an SD card. After the communication terminal 110 has been powered on, CPU 200 is capable of reading instructions from RAM 201 and executing these instructions that form one computer program.

Any and all steps performed by the communication terminal 110 may be implemented in software by execution of a set of instructions or program by a programmable computing machine, such as a PC (Personal Computer), a DSP (Digital Signal Processor) or a microcontroller; or else implemented in hardware by a machine or a dedicated component, such as an FPGA (Field-Programmable Gate Array) or an ASIC (Application-Specific Integrated Circuit).

The wireless communication interface 204 enables the communication terminal 110 to exchange signals with the scheduler device 120. The wireless communication interface 204 may enable the communication terminal 110 to exchange signals with other communication terminals of the wireless communications network 100.

**Fig. 2B** schematically represents an architecture of the scheduler device 120.

According to the shown architecture, the scheduler device 120 comprises the following components interconnected by a communications bus 306: a processor, microprocessor, microcontroller or CPU 300; a RAM 301; a ROM 302; an HDD 303, or any other device adapted to read information stored on storage means; a first wireless communication interface 304; and, a second wireless communication interface 305.

CPU 300 is capable of executing instructions loaded into RAM 301 from ROM 302 or from an external memory, such as HDD 303. After the scheduler device 120 has been powered on, CPU 300 is capable of reading instructions from RAM 301 and executing these instructions. The instructions form one computer program that causes CPU 300 to perform some or all of the steps of the algorithms described hereafter with regard to Figs. 4A, 4B, 5, 6 and 7.

Any and all steps of the algorithms described hereafter with regard to Figs. 4A, 4B, 5, 6 and 7 may be implemented in software by execution of a set of instructions or program by a programmable computing machine, such as a PC, a DSP or a microcontroller; or else implemented in hardware by a machine or a dedicated component, such as an FPGA or an ASIC.

The first wireless communication interface 304 enables the scheduler device 120 to exchange signals with any communication terminal 110a, 110b or 110c.

The second wireless communication interface 305 enables the scheduler device 120 to exchange signals with devices of another communications network, such as a core network in a telephony communications system.

**Fig. 4A** schematically represents an algorithm for determining candidate time-frequency resources for transmitting latency-constrained data packets via the wireless communications network 100.

In a step S401, the scheduler device 120 obtains descriptions of data packets to be transmitted via the wireless communications network 100, and stores information related to the obtained descriptions.

For downlink transmissions, when the scheduler device 120 is included in a base station, the scheduler device 120 receives descriptions of data packets to be transmitted by the base station or said data packets themselves. The data packets may be transmitted to the scheduler device 120 via an API (Application Programming Interface) and the scheduler device 120 may be able to parse the protocol headers present in the data packets to determine at least the type of the data packet to be transmitted, i.e. either latency-constrained data packet or other data packet.

For instance, the scheduler device 120 being implemented at the MAC (Medium Access Control) layer of the base station, the scheduler device 120 is able to parse the header fields of the data packets received from upper layers and to determine whether the data packet comprises TCP (Transport Control Protocol, as specified by the standard RFC-793) data or UDP (User Datagram Protocol, as specified by the standard RFC-768) or SCTP (Stream Control Transmission Protocol, as specified by the standard RFC-4960). The scheduler device 120 may even be able to obtain more detailed information by determining whether the data packet moreover comprises an application layer protocol header, such as a TFTP (Trivial File Transfer Protocol, as defined by the standard RFC-1350) header. According to this example, TCP data packets can be considered as data packets that are not latency-constrained, whereas UDP data packets are considered as latency-constrained data packets, except when the UDP data packets encapsulate TFTP data. Therefore, by parsing the header fields of the data packets, the scheduler device 120 is able to categorize the data packets to be transmitted.

For uplink transmissions, when the scheduler device 120 is included in a base station, the scheduler device 120 receives from other communication devices descriptions of data packets to be transmitted by said communication devices. The same situation occurs when the scheduler device 120 manages communications directly setup between the communication terminals.

The data packet descriptions shall contain enough information to enable the scheduler device 120 to determine at least the type of the concerned data packets, i.e. either latency-constrained data packets or other data packets.

In a following step S402, the scheduler device 120 obtains information representative of transmission conditions for each channel over which at least one aforementioned latency-constrained data packet has to be transmitted.

The scheduler device 120 may obtain CSI (Channel State Information) for each channel over which at least one obtained data packet has to be transmitted. CSI is determined by receiver devices. When the communication channel is reciprocal, CSI determined for the communication channel from a first communication device to a second communication device can be used as CSI for the communication channel from the second communication device to the first second communication device. CSI may be determined by the communication terminals 110a, 110b, 110c when receiving signals from the scheduler device 120 or other communication terminals and then be transmitted to the scheduler device 120. CSI may be determined by the scheduler device 120 when receiving signals from the communication terminals 110a, 110b, 110c.

When plural sub-carriers are used for each PRB, such as for LTE transmissions, an equivalent CSI is determined by combining CSI obtained for said plural sub-carriers.

The communication terminals 110a, 110b, 110c may obtain such information by short-term measurements performed on the channels. Such short-term channel state information is practically suitable for slow-varying channel conditions.

The communication terminals 110a, 110b, 110c may also obtain such information by long-term measurements performed on the channels, on the basis of the SINR (Signal to Interference-plus-Noise Ratio). Such long-term channel state information is practically suitable for fast-varying channel conditions. It means that some channels in the wireless communications network 100 may be considered as frequency flat channels for the time period T.

An approach for determining CSI is based on a training sequence, or pilot sequence, where a known signal is transmitted and the channel matrix representing the channel conditions is estimated using the combined knowledge of the transmitted and received signal.

In case of time selective fading channels, a Kalman filter may be used to perform predictions of the upcoming channels conditions, on the basis of already received short-term channel state information.

In a following step S403, the scheduler device 120 determines candidate PRBs for transmitting the latency-constrained data packets during the time period T, and stores information related to the determined candidate PRBs.

To achieve this, the scheduler device may firstly separate into two groups the latency-constrained data packets from the other data packets.

Then, the scheduler device 120 may build a table of candidate PRBs for each latency-constrained data packet. These tables are two-dimensional and map the time-frequency resource grid of Fig. 3. In each table of candidate PRBs, the scheduler device 120 tags each PRB that can be used, according to CSI obtained in the step S402, for transmitting the considered latency-constrained data packet. When CSI obtained in the step S402 indicates that the channel capacity, or any other metric related to transmission performance, for the considered PRB and for the considered latency-constrained packet to be transmitted is above a threshold, the scheduler device 120 tags the considered PRB as a candidate for transmitting the considered latency-constrained packet. The threshold is preferably defined according to the data packet length. Indeed, the transmission performance is usually degraded when increasing the wireless transmission spectral efficiency, while the packet length increases, i.e. when increasing the number of bits transmitted per PRB. The scheduler device 120 only tags PRBs allowing meeting the latency constraint associated with the considered latency-constrained data packet.

Thus, the scheduler device 120 obtains for each latency-constrained data packet an information indicating each PRB, in the time period T, which may be used for transmitting said latency-constrained data packet. As the transmission channels are a priori different between different couples of communication devices, the set of candidate PRBs is a priori different from one latency-constrained data packet to another.

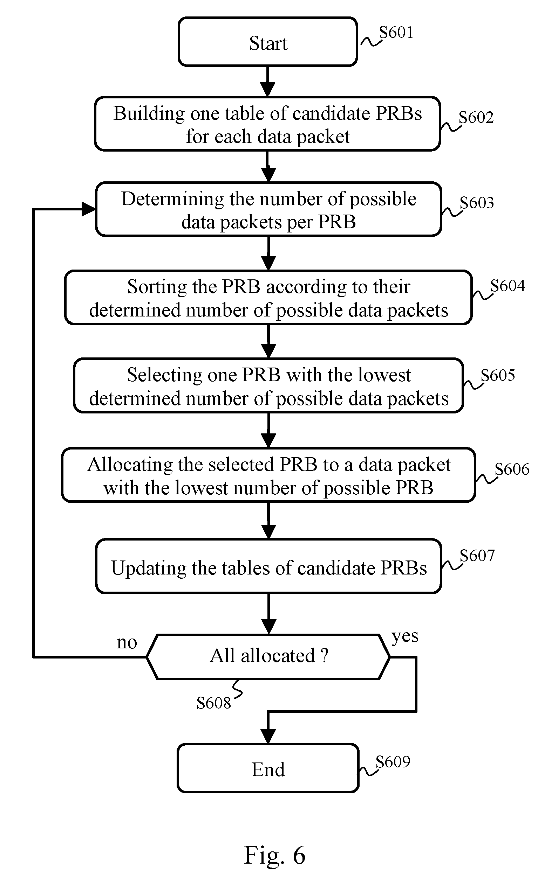

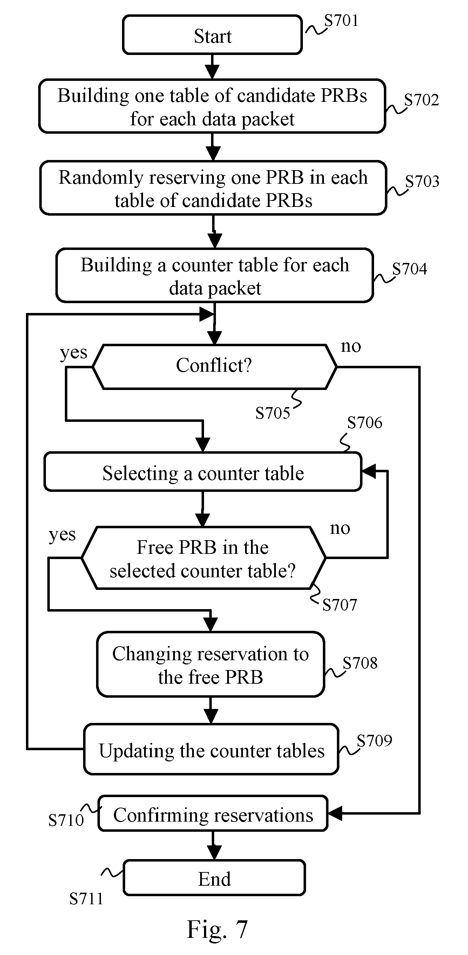

In a variant, the scheduler device 120 may remove candidate PRBs from at least one set of candidate PRBs. In other words, the scheduler device 120 may limit the number of PRBs in at least one set of candidate PRBs. This allows limiting the complexity and/or execution time of the allocation process, especially when executing the algorithms of Figs. 6 and 7 detailed hereafter.

The scheduler device 120 may randomly remove PRBs from at least one set of candidate PRBs.

The scheduler device 120 may also remove PRBs corresponding to a time interval for which the number of candidate frequencies is the lowest. For instance, if the set of candidate PRBs consists of PRB_{0,0}, PRB_{1,0}, PRB_{2,0}, PRB_{0,1} and PRB_{2,2}, then it means that three candidates exist in the time slot to, one candidate exists in the time slot t₁ and one candidate exists in the time slot t₂. Then the scheduler device 120 preferably removes either the PRB candidate in the time slot t₁ or in the time slot t₂. This allows maximizing the possible alternatives for transmitting the latency-constrained data packet when reaching the latency constraint.

In a following step S404, the scheduler device 120 checks whether there is a change in the transmission conditions in the wireless communications network 100. In other words, the scheduler device 120 checks whether updated information representative of transmission conditions for each channel over which at least one aforementioned latency-constrained data packet has to be transmitted is available. If such updated information is available, the scheduler device 120 repeats the step S402. Otherwise, the scheduler device 120 performs a step S405.

In the step S405, the scheduler device 120 checks whether other data packets, and especially other latency-constrained data packets, have to be transmitted via the wireless communications network 100. In other words, the scheduler device 120 checks whether at least one new data packet, or description thereof, is available. If at least one new data packet, or description thereof, is available, the scheduler device 120 repeats the step S401. Otherwise, the scheduler device repeats the step S404.

**Fig. 4B** schematically represents an algorithm for allocating time-frequency resources to data packets to be transmitted via the wireless communications network 100. The algorithm of Fig. 4B aims at being performed by the scheduler device 120 in parallel to the algorithm of Fig. 4A.

In a step S410, the scheduler device 120 obtains descriptions of data packets to be transmitted via the wireless communications network 100, by reading the information stored during the step S401.

In a following step S411, the scheduler device 120 determines candidate PRBs for transmitting the latency-constrained data packets during the time period T, by reading the information stored during the step S403.

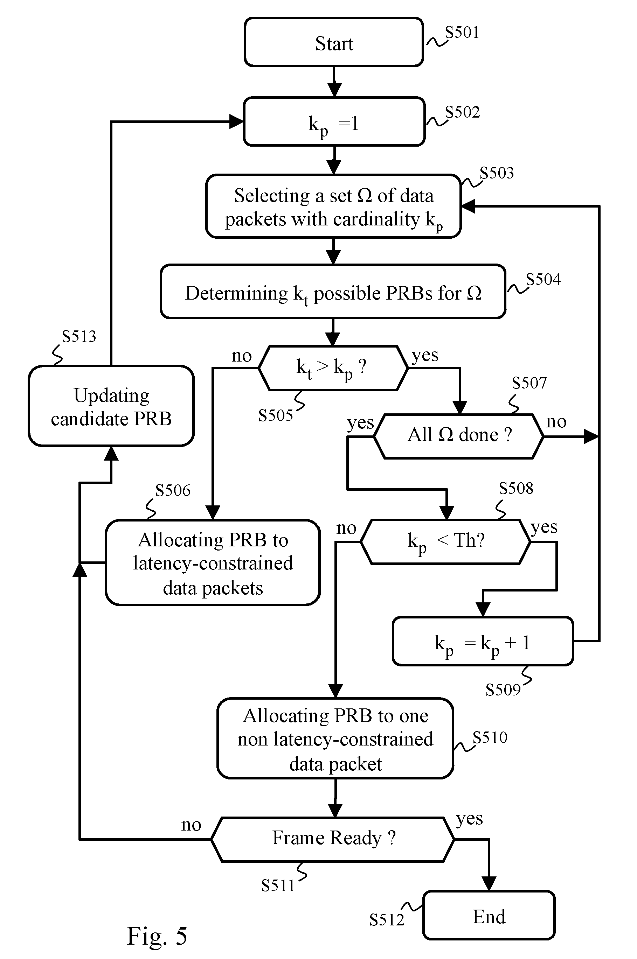

In a following step S412, the scheduler device 120 checks whether the number of PRBs needed for transmitting at least one latency-constrained data packet is equal to the number of determined candidate PRBs for said at least one latency-constrained data packet. The check may be performed for only one latency-constrained data packet or for several data packets. More than one iteration of the check may be performed, so that the numbers of needed PRBs and of candidate PRBs are compared for different sets of latency-constrained data packets to be transmitted via the wireless communications network 100. An approach to perform this check is detailed hereafter with regard to Fig. 5.

When the number of PRBs needed for transmitting said at least one latency-constrained data packet is equal to the number of determined candidate PRBs for said at least one latency-constrained data packet, the scheduler device 120 performs a step S414. Otherwise, the scheduler device 120 performs a step S413.

It is considered herein that the number of PRBs needed for transmitting the latency-constrained data packets is never lower than the number of determined candidate PRBs for said latency-constrained data packets. If such a situation should occur, the transmission of at least one latency-constrained data packet would be cancelled or a PRB that is a priori not adequate, i.e. not candidate, for transmitting the latency-constrained data packet would be allocated for transmitting said latency-constrained data packet.

In the step S413, the scheduler device 120 reserves at least one PRB for transmitting at least one data packet other than the aforementioned latency-constrained data packets. The reservation may be used by another scheduler device for allocating the reserved PRB to data packets of which said another scheduler device is in charge. Said another scheduler device may be in charge of scheduling the transmissions of data packets that are not latency-constrained or associated with a less severe latency constraint. The scheduler device 120 then performs a step S415. In a variant, the reservation consists in allocating the at least one PRB to the at least one data packet other than the aforementioned latency-constrained data packets. This variant is detailed hereafter with regard to Fig. 4C.

In the step S413, the scheduler device 120 may reserve more than one PRB for data packets other than the aforementioned latency-constrained data packets. For instance, let's consider a set of two latency-constrained data packets having four candidate PRBs. The scheduler device 120 may then reserve two PRBs for data packets other than the aforementioned latency-constrained data packets. In other words, the scheduler device 120 can reserve a number of PRBs that is less than the difference between the candidate PRBs and the needed PRBs for the latency-constrained data packets.

In a preferred embodiment, the scheduler device 120 reserves one PRB for one data packet other than the aforementioned latency-constrained data packets and then performs the step S415. This allows rapidly taking into account changes in the transmission conditions in the wireless communications network 100 or in the set of data packets to be scheduled for transmission. The algorithms detailed hereafter with regard to Figs. 5, 6 and 7 illustrate this preferred embodiment. However, their principles remain valid for reserving or allocating more than one PRB to respective data packets other than the aforementioned latency-constrained data packets. The one with ordinary skills in the art would be able to slightly adapt the detailed description hereafter to perform such a reservation or allocation of plural PRBs.

In the step S414, the scheduler device 120 allocates at least one PRB to at least one latency-constrained data packet. Different approaches to perform this allocation are detailed hereafter with regard to Figs. 6 and 7. Then, the scheduler device 120 performs the step S415.

In the step S415, the scheduler device 120 checks whether a frame is ready, either because the instant at which the frame should be transmitted is reached or because the PRBs corresponding to this frame are all allocated. When the frame is ready, the scheduler device repeats the step S410. Otherwise, the scheduler device 120 repeats the step S411. Repeating the process each time a frame is built allows taking into account newly declared latency-constrained data packets to be transmitted and taking into account changes in the transmission condition over the frequency selective fading channel, as updated by the execution of the algorithm of Fig. 4A.

In a variant, the scheduler device 120 checks in the step S415 whether a predefined number of frames are ready.

In another variant, the scheduler device 120 checks in the step S415 whether all data packets have been allocated to respective PRBs or whether all PRBs have been allocated to data packets.

In yet another variant, when the scheduler device 120 performs the step S415, the scheduler device 120 may further check whether the frame that is ready, or frames that are ready, contain at least one PRB allocated to at least one respective data packet that is not latency-constrained. If the frame, or frames, that are ready contain only PRBs allocated to latency-constrained data packets, then the scheduler device 120 repeats the step S410. Otherwise, the scheduler device 120 repeats the steps S411 and S412 in order to determine in advance, whether there won't be remaining enough candidate PRBs for the remaining latency-constrained packets, during the next iteration of the algorithm. To achieve this, the scheduler device 120 updates, temporarily, the candidate PRBs for each latency-constrained data packet. If this repeating of the steps S411 and S412 shows that there won't be enough remaining candidate PRBs for the remaining latency-constrained packets, the scheduler device 120 cancels the allocation for at least one respective data packet that is not latency-constrained and allocates the corresponding PRB, or PRBs, to latency-constrained data packets or tries to allocate another PRB to the at least one data packet that is not latency-constrained. Otherwise, the scheduler device 120 confirms the allocation.

The algorithm of Fig. 4B illustrates that the scheduler device 120 performs at least one iteration of the following steps: allocating at least one time-frequency resource among the candidate time-frequency resources to respective at least one latency-constrained data packet, when the number of at least one time-frequency resource needed for transmitting said at least one latency-constrained data packet is equal to the number of determined candidate time-frequency resources for said at least one latency-constrained data packet; and reserving at least one time-frequency resource to respective at least one other data packet, when no candidate time-frequency resource has been allocated to any latency-constrained data packet in the preceding step.

**Fig. 4C** schematically represents another algorithm for allocating time-frequency resources to data packets to be transmitted via the wireless communications network 100. The algorithm of Fig. 4C aims at being performed by the scheduler device 120 in parallel to the algorithm of Fig. 4A. The algorithm of Fig. 4C aims at replacing the algorithm of Fig. 4B.

In the algorithm of Fig. 4C, the scheduler device 120 performs the same steps as in the algorithm of Fig. 4B, except that the step S413 is replaced by a step S423.

In the step S423, the scheduler device 120 allocates at least one PRB for transmitting at least one data packet other than the aforementioned latency-constrained data packets.

When the scheduler device 120 needs to schedule the transmissions of several data packets other than the aforementioned latency-constrained data packets, the scheduler device 120 shall select which PRB shall be allocated to which data packet, according to a predefined criteria.

The scheduler device 120 may select the data packet, to which the PRB shall be allocated, in a round-robin fashion, i.e. by selecting the next data packet in a stack of data packets waiting for being scheduled for transmission.

The scheduler device 120 may select the data packet, to which the PRB shall be allocated, in a proportionally fair compromise, allowing all applications at least a minimal level of service, i.e. by jointly selecting the PRB and the data packet, as a function of an estimated data rate for each application.

The scheduler device 120 may select the data packet, to which the PRB shall be allocated, maximizing the SINR, i.e. by selecting the couple of PRB and data packet that maximizes the SINR.

The algorithm of Fig. 4C illustrates that the scheduler device 120 performs at least one iteration of the following steps: allocating at least one time-frequency resource among the candidate time-frequency resources to respective at least one latency-constrained data packet, when the number of at least one time-frequency resource needed for transmitting said at least one latency-constrained data packet is equal to the number of determined candidate time-frequency resources for said at least one latency-constrained data packet; and allocating at least one time-frequency resource to respective at least one other data packet, when no candidate time-frequency resource has been allocated to any latency-constrained data packet in the preceding step.

**Fig. 5** schematically represents yet another algorithm for allocating time-frequency resources to data packets to be transmitted via the wireless communications network 100.

The algorithm starts in a step S501. In a following step S502, the scheduler device 120 sets a variable parameter kp to 1. The parameter kp represents a number of considered latency-constrained data packets.

In a following step S503, the scheduler device 120 selects a set Ω of latency-constrained data packets among the latency-constrained data packets to be transmitted. The set Ω has therefore a cardinality defined by the variable parameter kp.

For example, let's consider that three latency-constrained packets A, B and C have to be transmitted via the wireless communications network 100. When the variable parameter kp equals to 1, the set Ω comprises either A, B or C. When the variable parameter kp equals to 2, the set Ω comprises either A and B, B and C, or A and C. In the step S503, the scheduler device 120 selects one among these possibilities.

In a following step S504, the scheduler device 120 determines the candidate PRBs for transmitting the latency-constrained data packets of the set Ω. This may be achieved by merging into a single table the aforementioned tables of candidate PRBs for the latency-constrained data packets of the set Ω. When a PRB is present in plural tables of candidate PRBs for the latency-constrained data packets of the set Ω, this PRB appears only once in the table resulting from the merge operation. Let's denote kₜ the number of candidate PRBs for transmitting the latency-constrained data packets of the set Ω. In other words, kₜ represents the number of PRBs tagged in the table resulting from the merge operation.

In a following step S505, the scheduler device 120 compares kₜ and kp, and checks whether kₜ is greater than kp. In other words, the scheduler device 120 checks whether the number of candidate PRBs for transmitting the latency-constrained data packets of the set Ω is greater than the number of needed PRBs for transmitting said latency-constrained data packets. When kₜ is greater than kp, the scheduler device 120 performs a step S507. Otherwise, the scheduler device 120 performs a step S506.

In the step S506, the scheduler device 120 allocates a PRB to each latency-constrained data packet of the set Ω. Different approaches to perform this allocation are detailed hereafter with regard to Figs. 6 and 7. Then, the scheduler device 120 performs a step S513.

In the step S507, the scheduler device 120 checks whether all the possible combinations of kp latency-constrained data packets have been analysed. When all possible combinations of kp latency-constrained data packets have been analysed, the scheduler device 120 performs a step S508. Otherwise, the scheduler device 120 repeats the step S503 and selects another set Ω of kp latency-constrained data packets.

In the step S508, the scheduler device 120 checks whether the variable parameter kp is lower than a predefined threshold. This predefined threshold allows limiting the execution time period of the algorithm to a given value of the variable parameter kp, for which there is a low probability that a time-frequency resource allocation conflict occurs. When the variable parameter kp is lower than the predefined threshold, the scheduler device 120 performs a step S509. Otherwise, the scheduler device 120 performs a step S510. In a variant, all possible values of the variable parameter kp from 1 up to the number of latency-constrained data packets to be transmitted are checked by the scheduler device 120.

In a variant, the scheduler device 120 determines how many times the step S507 has been performed since the last execution of the step S401. This check is then performed each time the step S507 is performed. And if the number of times the step S507 has been performed is greater than a predefined threshold, the scheduler device 120 performs the step S510, else it performs the step S509. This allows ensuring that a time-frequency resource allocation is performed within a given execution timeframe.

Not checking all possible values of the variable parameter kp may result in discarding a latency-constrained data packet. Selecting a latency-constrained data packet may be performed on the basis of priorities associated with the latency-constrained data packets. Not checking all possible values of the variable parameter kp provides more freedom to the time-frequency resources allocation to data packets that are not latency-constrained, and the throughput is improved for the transmission of said data packets that are not latency-constrained.

In the step S509, the scheduler device 120 increases by one unit the value of the variable parameter kp. Then the scheduler device 120 repeats the step S503.

In the step S510, the scheduler device 120 allocates one PRB to one data packet that is not latency-constrained. Then, the scheduler device 120 performs a step S511.

In the step S511, the scheduler device 120 checks whether a frame is ready, either because the instant at which the frame should be transmitted is reached or because the PRBs corresponding to this frame are all allocated. When the frame is ready, the algorithm ends in a step S512. Otherwise, the scheduler device 120 performs the step S513.

In the step S513, the scheduler device 120 updates the sets of candidate PRBs determined for each latency-constrained data packet for which no time-frequency resource allocation has been yet done, by taking into account the PRB allocated either in the step S506 or in the step S510. This update may further take into account updates performed by execution of the step S403, when a change of channel conditions occurred and/or when new latency-constrained data packets have to be transmitted via the wireless communication network 100. Then the scheduler device 120 repeats the step S502.

**Fig. 6** schematically represents a first algorithm for allocating time-frequency resources to latency-constrained data packets. The algorithm aims at allocating a PRB to each latency-constrained data packet among a set Ω of considered latency-constrained data packets.

The algorithm starts in a step S601. In a following step S602, the scheduler device 120 builds, or obtains, one table of candidate PRBs for each considered latency-constrained data packet, as already described.

In a following step S603, the scheduler device 120 determines the number of candidate latency-constrained data packets for each PRB. Indeed, each PRB may have been tagged in plural tables of candidate PRBs.

In a following step S604, the scheduler device 120 sorts the PRBs according to their determined number of candidate latency-constrained data packets.

In a following step S605, the scheduler device 120 selects a PRB with the lowest determined number of candidate latency-constrained data packets. When plural PRBs have the lowest determined number of candidate latency-constrained data packets, the scheduler device 120 selects a PRB among these PRBs.

In a following step S606, the scheduler device 120 allocates the selected PRB to a latency-constrained data packet with the lowest number of candidate PRBs, as tagged in the corresponding table of candidate PRBs.

In a following step S607, the scheduler device 120 updates the table of candidate PRBs. The scheduler device 120 ensures that the allocated PRB is no more tagged in any table of candidate PRBs.

In a following step S608, the scheduler device 120 checks whether a PRB has been allocated to each latency-constrained data packet of the set Ω. When a PRB has been allocated to each latency-constrained data packet of the set Ω, the algorithm ends in a step S609. Otherwise, the scheduler device 120 repeats the step S603 and updates the number of candidate latency-constrained data packets for each PRB.

**Fig. 7** schematically represents a second algorithm for allocating time-frequency resources to latency-constrained data packets. The algorithm aims at allocating a PRB to each latency-constrained data packet among a set Ω of considered latency-constrained data packets.

The algorithm starts in a step S701. In a following step S702, the scheduler device 120 builds, or obtains, one table of candidate PRBs for each considered latency-constrained data packet, as already described.

In a following step S703, the scheduler device 120 reserves one PRB in each table of candidate PRBs for transmitting via the wireless communications network 100 the latency-constrained data packet with which said table of candidate PRBs is associated. This reservation may be randomly performed.

In a following step S704, the scheduler device 120 builds one counter table for each table of candidate PRBs. The counter tables may be of same size as the tables of candidate PRBs, i.e. the counter tables map the time-frequency resource grid of Fig. 3. In a preferred embodiment, the counter tables contain only counters for PRBs that are tagged in the respective tables of candidate PRBs.

Each element of the counter tables represents the number of latency-constrained data packets, for which a reservation has been done with the corresponding PRB. Indeed, each PRB may have been reserved in plural tables of candidate PRBs and, for each PRB, the scheduler device 120 determines the number of latency-constrained data packets to which the considered PRB has been reserved.

In a following step S704, the scheduler device 120 checks whether a conflict exists in the reservations. A conflict exists when at least one counter is greater than 1. When there is a conflict, the scheduler device 120 performs a step S706. Otherwise, the scheduler device 120 performs a step S710.

In the step S710, the scheduler device 120 confirms the reservations made so far and allocates the reserved PRBs to the corresponding latency-constrained data packets. Then, the algorithm ends in a step S711.

In the step S706, the scheduler device 120 selects a counter table. In a following step S707, the scheduler device 120 checks whether a free PRB exists in the selected counter table. A free PRB is a PRB that has an associated null counter and that is tagged in the corresponding table of candidate PRBs. When such a PRB exists, the scheduler device 120 performs a step S708. Otherwise, the scheduler device 120 repeats the step S706 and selects another counter table.

In the step S708, the scheduler device 120 changes the reservation from the conflicting PRB to one free PRB for the latency-constrained data packet associated with the counter table selected in the step S706.

In a following step S709, the scheduler device 120 updates the counter tables. The scheduler device 120 decreases by one unit each counter associated with the conflicting PRB and increases by one unit each counter associated with the previously free PRB. Then the scheduler device 120 repeats the step S705 to check whether a conflict remains in the reservations.

In another embodiment, complementary to the allocation processes described above with regard to Figs. 6 and 7, the scheduler device 120 or plural scheduler devices may manage the scheduling of the latency-constrained packets in separate threads according to priority levels associated with the latency-constrained packets. In this case, each thread is typically in charge of managing the scheduling of latency-constrained packets associated with a same priority level. Then, the comparing of the number of needed PRBs versus the number of candidate PRBs is performed for the latency-constrained data packets associated with the highest priority level. If the number of candidate PRBs is greater than the number of needed PRBs, then only one PRB is preferably allocated to a latency-constrained data packet associated with a lower priority level. Then, the comparing of the number of needed PRBs versus the number of candidate PRBs is repeated for the latency-constrained data packets associated with the highest priority level, and so on. This allows ensuring that the priority levels of the latency-constrained data packets are effectively taken into account when allocating the PRBs, and avoids allocating more PRBs to latency-constrained data packets associated with a lower priority level than what could be acceptable for the latency-constrained data packets associated with a higher priority level. For instance, let's consider a first set of K latency-constrained data packets having K+1 candidate PRBs and being associated with a priority level A and a second set of L latency-constrained data packets being associated with a priority level B, wherein B < A. The comparing of the needed PRBs versus the candidate PRBs for the first set of K latency-constrained data packets results in that there is not yet any need to perform allocation for these K latency-constrained data packets. However, only one PRB is free for allocation to the second set of L latency-constrained data packets if the candidate PRBs for these L latency-constrained data packets are in common with the candidate PRBs for the first set of K latency-constrained data packets, otherwise less than the K needed PRBs for the second set of K latency-constrained data packets remains.

## Claims

1. A method for allocating time-frequency resources to data packets for transmitting said data packets via a communications network (100) in which communications are performed over a frequency selective channel, the method being performed by a scheduler device (120) of the communications network, the method comprising at least one iteration of steps comprising:
- obtaining (S401) data packets to be transmitted, or descriptions thereof, each data packet being either a latency-constrained data packet or another data packet;
the method being **characterized in that** said iteration further comprises:
- obtaining (S402) information representative of transmission conditions for each channel over which at least one obtained data packet has to be transmitted;
- for each latency-constrained data packet, determining (S403,S411) each candidate time-frequency resource that can be used for transmitting said latency-constrained data packet, on the basis of the obtained information representative of transmission conditions and of a latency constraint associated with said latency-constrained data packet;
- determining (S412) whether the quantity of at least one time-frequency resource needed for transmitting said at least one latency-constrained data packet is equal to the quantity of determined candidate time-frequency resources for said at least one latency-constrained data packet;
- allocating (S414) at least one time-frequency resource among said candidate time-frequency resources to respective at least one latency-constrained data packet, when the scheduler device has determined that the quantity of at least one time-frequency resource needed for transmitting said at least one latency-constrained data packet is equal to the quantity of determined candidate time-frequency resources for said at least one latency-constrained data packet;
- reserving (S413) at least one time-frequency resource for transmitting respective at least one other data packet, when the scheduler device has not allocated any candidate time-frequency resource to any latency-constrained data packet in the preceding step.

2. The method according to claim 1, **characterized in that** reserving at least one time-frequency resource for transmitting respective at least one other data packet consists in allocating said at least one time-frequency resource for transmitting said respective at least one other data packet.

3. The method according to any one of claims 1 or 2, **characterized in that** it comprises:
- selecting a first set of at least one latency-constrained data packet, the first set having a first cardinality;
- determining the number of candidate time-frequency resources for said first set;
- selecting a second set of at least one latency-constrained data packet, when the number of candidate time-frequency resources for said first set is greater than the first cardinality;
- allocating, to each latency-constrained data packet of said first set, a time-frequency resource among said candidate time-frequency resources determined for said latency-constrained data packet of said first set, when the number of candidate time-frequency resources for said first set is not greater than the first cardinality.

4. The method according to claim 3, **characterized in that** the step of selecting a second set comprises a step of selecting a second set with a second cardinality different from the first cardinality.

5. The method according to claim 4, **characterized in that** it comprises:
- allocating (S508, S510) a time-frequency resource to said one other data packet, when the first cardinality has reached a first predefined threshold;
- selecting (S509, S503) the second set with the second cardinality different from the first cardinality, when the first cardinality has not reached the first predefined threshold.

6. The method according to claim 4, **characterized in that** it comprises:
- allocating a time-frequency resource to said one other data packet, when a number of times that the step of selecting a second set has been performed has reached a second predefined threshold;
- repeating the step of selecting a second set, when the number of times that the step of selecting a second set has been performed has not reached the second predefined threshold.

7. The method according to any one of claims 1 to 6, **characterized in that** it comprises, when allocating plural time-frequency resources to plural latency-constrained data packets :
- allocating (S606), to the latency-constrained data packet with the lowest determined quantity of candidate time-frequency resources, the candidate time-frequency resource for which said time-frequency resource is candidate for the lowest quantity of latency-constrained data packets.

8. The method according to any one of claims 1 to 6, **characterized in that** it comprises, when allocating plural time-frequency resources to plural latency-constrained data packets :
- reserving (S703) a candidate time-frequency resource to each latency-constrained data packets;
- for each latency-constrained data packet, changing (S708) the reserved candidate time-frequency resource to another candidate time-frequency resource, when said reserved candidate time-frequency resource is reserved for at least two latency-constrained data packet;
- allocating (S710) the reserved candidate time-frequency resources, when all reserved candidate time-frequency resources are reserved for only one latency-constrained data packet.

9. The method according to any one of claims 1 to 8, **characterized in that** it comprises, prior to allocating at least one time-frequency resource to said respective at least one other data packet:
- updating the candidate time-frequency resources for each latency-constrained data packet, according to the time-frequency resource to be allocated to said one other data packet;
- cancelling the allocating of the at least one time-frequency resource to said respective at least one other data packet, when the quantity of at least one time-frequency resource needed for transmitting said at least one latency-constrained data packet is lower than the quantity of determined candidate time-frequency resources for said at least one latency-constrained data packet;
- confirming the allocating of the at least one time-frequency resource to said respective at least one other data packet, when the quantity of at least one time-frequency resource needed for transmitting said at least one latency-constrained data packet is not lower than the quantity of determined candidate time-frequency resources for said at least one latency-constrained data packet.

10. The method according to any one of claims 1 to 9, **characterized in that** the steps of the method are reiterated when a predefined set of time-frequency resources constituting a frame has been allocated or when an instant at which said frame has to be transmitted is reached.

11. The method according to any one of claims 1 to 10, **characterized in that** it comprises limiting the quantity of candidate time-frequency resources for each latency-constrained packet.

12. The method according to any one of claims 1 to 11, **characterized in that** it comprises:
- building (S704), for each latency-constrained packet, a table mapped to a grid representing the time-frequency resources in the time and frequency domains;
- tagging each candidate time-frequency resource of each latency-constrained packet in the respective built table.

13. A device (120) for allocating time-frequency resources to data packets for transmitting said data packets via a communications network (100) in which communications are performed over a frequency selective channel, the device comprising:
- means for obtaining (S401) data packets to be transmitted, or descriptions thereof, each data packet being either a latency-constrained data packet or another data packet;
- means for obtaining (S402) information representative of transmission conditions for each channel over which at least one obtained data packet has to be transmitted;
- first determining means for determining (S403, S411), for each latency-constrained data packet, each candidate time-frequency resource that can be used for transmitting said latency-constrained data packet, on the basis of the obtained information representative of transmission conditions and of a latency constraint associated with said latency-constrained data packet;
- second determining means for determining (S412) whether the quantity of at least one time-frequency resource needed for transmitting said at least one latency-constrained data packet is equal to the quantity of determined candidate time-frequency resources for said at least one latency-constrained data packet;
- allocating means for allocating (S414) at least one time-frequency resource among said candidate time-frequency resources to respective at least one latency-constrained data packet, said first allocating means being implemented when the second determining means has determined that the quantity of at least one time-frequency resource needed for transmitting said at least one latency-constrained data packet is equal to the quantity of determined candidate time-frequency resources for said at least one latency-constrained data packet;
- reserving means for reserving (S413) at least one time-frequency resource for transmitting respective at least one other data packet, said reserving means being implemented when no candidate time-frequency resource has been allocated to any latency-constrained data packet in the preceding implementation of the allocating means.

14. A computer program **characterized in that** it comprises program code instructions which can be loaded in a programmable device for implementing the method according to any one of claims 1 to 12, when the program code instructions are run by the programmable device.

15. Information storage means, **characterized in that** they store a computer program comprising program code instructions which can be loaded in a programmable device for implementing the method according to any one of claims 1 to 12, when the program code instructions are run by the programmable device.

## Patentansprüche

1. Verfahren zum Zuteilen von Zeit-Frequenz-Ressourcen zu Datenpaketen zum Senden der Datenpakete über ein Kommunikationsnetzwerk (100), in welchem Kommunikationen über einen frequenzselektiven Kanal durchgeführt werden, wobei das Verfahren durch eine Zeitplanungsvorrichtung (120) des Kommunikationsnetzwerks durchgeführt wird, wobei das Verfahren wenigstens eine Iteration von Schritten aufweist, die folgendes aufweisen:
- Erhalten (S401) von zu sendenden Datenpaketen oder Beschreibungen davon, wobei jedes Datenpaket entweder ein latenzbeschränktes Datenpaket oder ein anderes Datenpaket ist;
wobei das Verfahren **dadurch gekennzeichnet** ist, das die Iteration weiterhin folgendes aufweist:
- Erhalten (S402) von Information, die Sendebedingungen für jeden Kanal darstellt, über welchen wenigstens ein erhaltenes Datenpaket zu senden ist;
- für jedes latenzbeschränktes Datenpaket Bestimmen (S403, S411) jeder Kandidaten-Zeit-Frequenz-Ressource, die zum Senden des latenzbeschränkten Datenpakets verwendet werden kann, auf der Basis der erhaltenen Information, die die Sendebedingungen darstellt, und einer zu dem latenzbeschränkten Datenpaket zugehörigen Latenzbeschränkung;
- Bestimmen (S412), ob die Menge von wenigstens einer zum Senden des wenigstens einen latenzbeschränkten Datenpakets nötigen Zeit-Frequenz-Ressource gleich der Menge von bestimmten KandidatenZeit-Frequenz-Ressourcen für das wenigstens eine latenzbeschränkte Datenpaket ist;
- Zuteilen (S414) wenigstens einer Zeit-Frequenz-Ressource unter den Kandidaten-Zeit-Frequenz-Ressourcen zu jeweils wenigstens einem latenzbeschränkten Datenpaket, wenn die Zeitplanungsvorrichtung bestimmt hat, dass die Menge von wenigstens einer zum Senden des wenigstens einen latenzbeschränkten Datenpakets nötigen Zeit-Frequenz-Ressource gleich der Menge von bestimmten Kandidaten-Zeit-Frequenz-Ressourcen für das wenigstens eine latenzbeschränkte Datenpaket ist;
- Reservieren (S413) wenigstens einer Zeit-Frequenz-Ressource zum Senden von jeweils wenigstens einem anderen Datenpaket, wenn die Zeitplanungsvorrichtung im vorangehenden Schritt irgendeine Kandidaten-Zeit-Frequenz-Ressource nicht zu irgendeinem latenzbeschränkten Datenpaket zugeteilt hat.

2. Verfahren nach Anspruch 1, **dadurch gekennzeichnet, dass** ein Reservieren von wenigstens einer Zeit-Frequenz-Ressource zum Senden von jeweils wenigstens einem anderen Datenpaket in einem Zuteilen der wenigstens einen Zeit-Frequenz-Ressource zum Senden des jeweils wenigstens einen anderen Datenpakets besteht.

3. Verfahren nach einem der Ansprüche 1 oder 2, **dadurch gekennzeichnet, dass** es folgendes aufweist:
- Auswählen einer ersten Gruppe von wenigstens einem latenzbeschränkten Datenpaket, wobei die erste Gruppe eine erste Kardinalität hat;
- Bestimmen der Anzahl von Kandidaten-Zeit-Frequenz-Ressourcen für die erste Gruppe;
- Auswählen einer zweiten Gruppe von wenigstens einem latenzbeschränkten Datenpaket, wenn die Anzahl von Kandidaten-Zeit-Frequenz-Ressourcen für die erste Gruppe größer als die erste Kardinalität ist;
- Zuteilen einer Zeit-Frequenz-Ressource unter den für das latenzbeschränkte Datenpaket der ersten Gruppe bestimmten Kandida-ten-Zeit-Frequenz-Ressourcen zu jedem latenzbeschränkten Datenpaket, wenn die Anzahl von Kandidaten-Zeit-Frequenz-Ressourcen für die erste Gruppe nicht größer als die erste Kardinalität ist.

4. Verfahren nach Anspruch 3, **dadurch gekennzeichnet, dass** der Schritt zum Auswählen einer zweiten Gruppe einen Schritt zum Auswählen einer zweiten Gruppe mit einer zweiten Kardinalität, die unterschiedlich von der ersten Kardinalität ist, aufweist.

5. Verfahren nach Anspruch 4, **dadurch gekennzeichnet, dass** es folgendes aufweist:
- Zuteilen (S508, S510) einer Zeit-Frequenz-Ressource zu dem einen anderen Datenpaket, wenn die erste Kardinalität eine erste vordefinierte Schwelle erreicht hat;
- Auswählen (S509, S503) der zweiten Gruppe mit der zweiten Kardinalität, die unterschiedlich von der ersten Kardinalität ist, wenn die erste Kardinalität die erste vordefinierte Schwelle nicht erreicht hat.

6. Verfahren nach Anspruch 4, **dadurch gekennzeichnet, dass** es folgendes aufweist:
- Zuteilen einer Zeit-Frequenz-Ressource zu dem einen anderen Datenpaket, wenn eine Anzahl von Malen, für welche der Schritt zum Auswählen einer zweiten Gruppe durchgeführt worden ist, eine zweite vordefinierte Schwelle erreicht hat;
- Wiederholen des Schritts zum Auswählen einer zweiten Gruppe, wenn die Anzahl von Malen, für welche der Schritt zum Auswählen einer zweiten Gruppe durchgeführt worden ist, die zweite vordefinierte Schwelle nicht erreicht hat.

7. Verfahren nach einem der Ansprüche 1 bis 6, **dadurch gekennzeichnet, dass** es folgendes aufweist, wenn ein Zuteilen von mehreren Zeit-Frequenz-Ressourcen zu mehreren latenzbeschränkten Datenpaketen erfolgt:
- Zuteilen (S606) der Kandidaten-Zeit-Frequenz-Ressource, für welche die Zeit-Frequenz-Ressource Kandidat für die geringste Menge von latenzbeschränkten Datenpaketen ist, zu dem latenzbeschränkten Datenpaket mit der geringsten bestimmten Menge.

8. Verfahren nach einem der Ansprüche 1 bis 6, **dadurch gekennzeichnet, dass** es folgendes aufweist, wenn ein Zuteilen von mehreren ZeitFrequenz-Ressourcen zu mehreren latenzbeschränkten Datenpaketen erfolgt:
- Reservieren (S703) einer Kandidaten-Zeit-Frequenz-Ressource zu jedem latenzbeschränkten Datenpaket;
- für jedes latenzbeschränkte Datenpaket Ändern (S708) der reservierten Kandidaten-Zeit-Frequenz-Ressource zu einer anderen Kandidaten-Zeit-Frequenz-Ressource, wenn die reservierte Kandidaten-Zeit-Frequenz-Ressource für wenigstens zwei latenzbeschränkte Datenpakete reserviert ist;
- Zuteilen (S710) der reservierten Kandidaten-Zeit-Frequenz-Ressourcen, wenn alle Kandidaten-Zeit-Frequenz-Ressourcen für nur ein latenzbeschränktes Datenpaket reserviert sind.

9. Verfahren nach einem der Ansprüche 1 bis 8, **dadurch gekennzeichnet, dass** es vor einem Zuteilen von wenigstens einer Zeit-Frequenz-Ressource zu dem jeweils wenigstens einen anderen Datenpaket folgendes aufweist:
- Updaten der Kandidaten-Zeit-Frequenz-Ressourcen für jedes latenzbeschränkte Datenpaket gemäß der zu dem einen anderen Datenpaket zuzuteilenden Zeit-Frequenz-Ressource;
- Löschen des Zuteilens der wenigstens einen Zeit-Frequenz-Ressource zu dem jeweils wenigstens einen anderen Datenpaket, wenn die Menge von wenigstens einer zum Senden des wenigstens einen latenzbeschränkten Datenpakets nötigen Zeit-Frequenz-Ressource geringer als die Menge von bestimmten Kandidaten-Zeit-Frequenz-Ressourcen für das wenigstens eine latenzbeschränkte Datenpaket ist;
- Bestätigen des Zuteilens der wenigstens einen Zeit-Frequenz-Ressource zu dem jeweils wenigstens einen anderen Datenpaket, wenn die Menge von wenigstens einer zum Senden des wenigstens einen latenzbeschränkten Datenpakets nötigen Zeit-Frequenz-Ressource nicht geringer als die Menge von bestimmten Kandidaten-Zeit-Frequenz-Ressourcen für das wenigstens eine latenzbeschränkte Datenpaket ist.

10. Verfahren nach einem der Ansprüche 1 bis 9, **dadurch gekennzeichnet, dass** die Schritte des Verfahrens ständig wiederholt werden, wenn eine vordefinierte Gruppe von Zeit-Frequenz-Ressourcen, die einen Frame bilden, zugeteilt worden ist oder wenn ein Zeitpunkt, zu welchem der Frame zu senden ist, erreicht ist.

11. Verfahren nach einem der Ansprüche 1 bis 10, **dadurch gekennzeichnet, dass** es ein Begrenzen der Menge von Kandidaten-Zeit-Frequenz-Ressourcen für jedes latenzbeschränkte Paket aufweist.

12. Verfahren nach einem der Ansprüche 1 bis 11, **dadurch gekennzeichnet, dass** es folgendes aufweist:
- für jedes latenzbeschränkte Datenpaket Bilden (S704) einer Tabelle, die auf ein Gitter abgebildet ist, das die Zeit-Frequenz-Ressourcen in den Zeit- und Frequenzbereichen darstellt;
- Markieren jeder Kandidaten-Zeit-Frequenz-Ressource von jedem latenzbeschränkten Paket in der jeweiligen gebildeten Tabelle.

13. Vorrichtung (120) zum Zuteilen von Zeit-Frequenz-Ressourcen zu Datenpaketen zum Senden der Datenpakete über ein Kommunikationsnetzwerk (100), in welchem Kommunikationen über einen frequenzselektiven Kanal durchgeführt werden, wobei die Vorrichtung folgendes aufweist:
- eine Einrichtung zum Erhalten (S401) von zu sendenden Datenpaketen oder Beschreibungen davon, wobei jedes Datenpaket entweder ein latenzbeschränktes Datenpaket oder ein anderes Datenpaket ist;
- eine Einrichtung zum Erhalten (S402) von Information, die Sendebedingungen für jeden Kanal darstellt, über welchen wenigstens ein erhaltenes Datenpaket zu senden ist;
- eine erste Bestimmungseinrichtung zum Bestimmen (S403, S411) jeder Kandidaten-Zeit-Frequenz-Ressource, die zum Senden des latenzbeschränkten Datenpakets verwendet werden kann, auf der Basis der erhaltenen Information, die die Sendebedingungen darstellt, und einer zu dem latenzbeschränkten Datenpaket zugehörigen Latenzbeschränkung für jedes latenzbeschränkte Datenpaket;
- eine zweite Bestimmungseinrichtung zum Bestimmen (S412), ob die Menge von wenigstens einer zum Senden des wenigstens einen latenzbeschränkten Datenpakets nötigen Zeit-Frequenz-Ressource gleich der Menge von bestimmten Kandidaten-Zeit-Frequenz-Ressourcen für das wenigstens eine latenzbeschränkte Datenpaket ist;
- eine Zuteilungseinrichtung zum Zuteilen (S414) wenigstens einer Zeit-Frequenz-Ressource unter den Kandidaten-Zeit-FrequenzRessourcen zu jeweils wenigstens einem latenzbeschränkten Datenpaket, wobei diese erste Zuteilungseinrichtung implementiert ist, wenn die zweite Bestimmungseinrichtung bestimmt hat, dass die Menge von wenigstens einer zum Senden des wenigstens einen latenzbeschränkten Datenpakets nötigen Zeit-Frequenz-Ressource gleich der Menge von bestimmten Kandidaten-Zeit-Frequenz-Ressourcen für das wenigstens eine latenzbeschränkte Datenpaket ist;
- eine Reservierungseinrichtung zum Reservieren (S413) wenigstens einer Zeit-Frequenz-Ressource zum Senden von jeweils wenigstens einem Datenpaket, wobei die Reservierungseinrichtung implementiert ist, wenn bei der vorangehenden Implementierung der Zuteilungseinrichtung keine Kandidaten-Zeit-Frequenz-Ressource zu irgendeinem latenzbeschränkten Datenpaket zugeteilt worden ist.

14. Computerprogramm, **dadurch gekennzeichnet, dass** es Programmcodeanweisungen aufweist, die in eine programmierbare Vorrichtung geladen werden können, zum Implementieren des Verfahrens nach einem der Ansprüche 1 bis 12, wenn man die Programmcodeanweisungen durch die programmierbare Vorrichtung laufen lässt.

15. Informationsspeichereinrichtung, **dadurch gekennzeichnet, dass** sie ein Computerprogramm speichert, das Programmcodeanweisungen aufweist, die in eine programmierbare Vorrichtung geladen werden können, zum Implementieren des Verfahrens nach einem der Ansprüche 1 bis 12, wenn man die Programmcodeanweisungen durch die programmierbare Vorrichtung laufen lässt.

## Revendications

1. Procédé pour allouer des ressources temps-fréquence à des paquets de données pour transmettre lesdits paquets de données via un réseau de communication (100) dans lequel des communications sont effectuées sur un canal sélectif en fréquence, le procédé étant effectué par un dispositif planificateur (120) du réseau de communication, le procédé comprenant au moins une itération d'étapes comprenant :
- obtenir (S401) des paquets de données à transmettre, ou des descriptions des paquets de données à transmettre, chaque paquet de données étant soit un paquet de données à latence contrainte ou un autre paquet de données ;
le procédé étant **caractérisé en ce que** ladite itération comprend en outre :
- obtenir (S402) une information représentative de conditions de transmission pour chaque canal sur lequel au moins un paquet de données obtenu doit être transmis ;
- pour chaque paquet de données à latence contrainte, déterminer (S403, S411) chaque ressource temps-fréquence candidate qui peut être utilisée pour transmettre ledit paquet de données à latence contrainte, sur la base de l'information représentative de conditions de transmission obtenue et d'une contrainte de latence associée avec ledit paquet de données à latence contrainte ;
- déterminer (S412) si la quantité d'au moins une ressource temps-fréquence nécessaire pour transmettre ledit au moins un paquet de données à latence contrainte est égale à la quantité déterminée de ressources temps-fréquence candidates pour ledit au moins un paquet de données à latence contrainte ;
- allouer (S414) au moins une ressource temps-fréquence parmi lesdites ressources temps-fréquence candidates à au moins un paquet de données à latence contrainte respectif, lorsque le dispositif planificateur a déterminé que la quantité d'au moins une ressource temps-fréquence nécessaire pour transmettre ledit au moins un paquet de données à latence contrainte est égale à la quantité déterminée de ressources temps-fréquence candidates pour ledit au moins un paquet de données à latence contrainte ;
- réserver (S413) au moins une ressource temps-fréquence pour transmettre au moins un autre paquet de données respectif, lorsque le dispositif planificateur n'a pas alloué de ressource temps-fréquence candidate à un quelconque paquet de données à latence contrainte dans l'étape précédente.

2. Procédé selon la revendication 1, **caractérisé en ce que** réserver au moins une ressource temps-fréquence pour transmettre au moins un paquet de données respectif consiste à allouer ladite ressource temps-fréquence pour transmettre ledit moins un paquet de données respectif.

3. Procédé selon l'une quelconque des revendications 1 et 2, **caractérisé en ce qu'**il comprend :
- sélectionner un premier ensemble d'au moins un paquet de données à latence contrainte, le premier ensemble ayant une première cardinalité ;
- déterminer le nombre de ressources temps-fréquence candidates pour ledit premier ensemble ;
- sélectionner un premier ensemble d'au moins un paquet de données à latence contrainte, lorsque le nombre de ressources temps-fréquence candidates pour ledit premier ensemble est plus grand que la première cardinalité ;
- allouer, à chaque paquet de données à latence contrainte dudit premier ensemble, une ressource temps-fréquence parmi les ressources temps-fréquence candidates pour ledit paquet de données à latence contrainte dudit premier ensemble, lorsque le nombre de ressources temps-fréquence candidates pour ledit premier ensemble n'est pas plus grand que la première cardinalité.

4. Procédé selon la revendication 3, **caractérisé en ce que** l'étape de sélectionner un second ensemble comprend une étape de sélectionner un second ensemble avec une seconde cardinalité différente de la première cardinalité.

5. Procédé selon la revendication 4, **caractérisé en ce qu'**il comprend :
- allouer (S508, S510) une ressource temps-fréquence audit autre paquet de données, lorsque la première cardinalité a atteint un premier seuil prédéfini ;
- sélectionner (S509, S503) le second ensemble avec la seconde cardinalité différente de la première cardinalité, lorsque la première cardinalité n'a pas atteint le premier seuil prédéfini.

6. Procédé selon la revendication 4, **caractérisé en ce qu'**il comprend :
- allouer une ressource temps-fréquence audit autre paquet de données, lorsqu'un nombre de fois que l'étape de sélectionner un second ensemble a été effectuée a atteint un second seuil prédéfini ;
- répéter l'étape de sélectionner un second ensemble, lorsque le nombre de fois que l'étape de sélectionner un second ensemble n'a pas atteint le second seuil prédéfini.

7. Procédé selon l'une quelconque des revendications 1 à 6, **caractérisé en ce qu'**il comprend, en allouant plusieurs ressources temps-fréquence à plusieurs paquets de données à latence contrainte :
- allouer (S606), au paquet de données à latence contrainte avec la plus petite quantité déterminée de ressources temps-fréquence candidates, la ressource temps-fréquence candidate pour laquelle ladite ressource temps-fréquence est candidate pour la plus petite quantité de paquets de données à latence contrainte.

8. Procédé selon l'une quelconque des revendications 1 à 6, **caractérisé en ce qu'**il comprend, en allouant plusieurs ressources temps-fréquence à plusieurs paquets de données à latence contrainte :
- réserver (S703) une ressource temps-fréquence candidate à chaque paquet de données à latence contrainte ;
- pour chaque paquet de données à latence contrainte, changer (708) la ressource temps-fréquence candidate réservée pour une autre ressource temps-fréquence candidate, lorsque ladite ressource temps-fréquence candidate réservée est réservée pour au moins deux paquets de données à latence contrainte ;
- allouer (S710) les ressources temps-fréquence candidates réservées, lorsque toutes les ressources temps-fréquence candidates sont réservées pour seulement un paquet de données à latence contrainte.

9. Procédé selon l'une quelconque des revendications 1 à 8, **caractérisé en ce qu'**il comprend, avant d'allouer au mois une ressource temps-fréquence audit au moins un autre paquet de données :
- mettre à jour les ressources temps-fréquence candidates pour chaque paquet de données à latence contrainte, selon la ressource temps-fréquence à allouer audit au moins un autre paquet de données ;
- annuler l'allocation de ladite au moins une ressource temps-fréquence audit au moins un autre paquet de données, lorsque la quantité d'au moins une ressource temps-fréquence nécessaire pour transmettre ledit au moins un paquet de données à latence contrainte est plus petite que la quantité de ressources temps-fréquence candidates déterminée pour ledit au moins un paquet de données à latence contrainte.

10. Procédé selon l'une quelconque des revendications 1 à 9, **caractérisé en ce que** les étapes du procédé sont réitérées lorsqu'un ensemble prédéfini de ressources temps-fréquence constituant une trame a été alloué ou lorsqu'un instant auquel ladite trame doit être transmise a été atteint.

11. Procédé selon l'une quelconque des revendications 1 à 10, **caractérisé en ce qu'**il comprend : limiter la quantité de ressources temps-fréquence candidates pour chaque paquet à latence contrainte.

12. Procédé selon l'une quelconque des revendications 1 à 11, **caractérisé en ce qu'**il comprend :
- construire (S704), pour chaque paquet à latence contrainte, une table mappée sur une grille représentant les ressources temps-fréquence dans les domaines de temps et de fréquence ;
- étiqueter chaque ressource temps-fréquence candidate de chaque paquet à latence contrainte dans la table respectivement construite.

13. Dispositif (120) pour allouer des ressources temps-fréquence à des paquets de données pour transmettre lesdits paquets de données via un réseau de communication (100) dans lequel des communications sont effectuées sur un canal sélectif en fréquence, le procédé étant effectué par un dispositif planificateur (120) du réseau de communication, le dispositif comprenant :
- des moyens pour obtenir (S401) des paquets de données à transmettre, ou des descriptions des paquets de données à transmettre, chaque paquet de données étant soit un paquet de données à latence contrainte ou un autre paquet de données ;
- des moyens pour obtenir (S402) une information représentative de conditions de transmission pour chaque canal sur lequel au moins un paquet de données obtenu doit être transmis ;
- des premiers moyens de détermination pour déterminer (S403, S411), pour chaque paquet de données à latence contrainte, chaque ressource temps-fréquence candidate qui peut être utilisée pour transmettre ledit paquet de données à latence contrainte, sur la base de l'information représentative de conditions de transmission obtenue et d'une contrainte de latence associée avec ledit paquet de données à latence contrainte ;
- des seconds moyens de détermination pour déterminer (S412) si la quantité d'au moins une ressource temps-fréquence nécessaire pour transmettre ledit au moins un paquet de données à latence contrainte est égale à la quantité déterminée de ressources temps-fréquence candidates pour ledit au moins un paquet de données à latence contrainte ;
- des moyens d'allocation pour allouer (S414) au moins une ressource temps-fréquence parmi lesdites ressources temps-fréquence candidates à au moins un paquet de données à latence contrainte respectif, lesdits premiers moyens d'allocation étant implémentés lorsque les seconds moyens de détermination ont déterminé que la quantité d'au moins une ressource temps-fréquence nécessaire pour transmettre ledit au moins un paquet de données à latence contrainte est égale à la quantité déterminée de ressources temps-fréquence candidates pour ledit au moins un paquet de données à latence contrainte ;
- des moyens de réservation pour réserver (S413) au moins une ressource temps-fréquence pour transmettre au moins un autre paquet de données respectif, lesdits moyens de réservation étant implémentés lorsqu'aucune ressource temps-fréquence candidate n'a été allouée à un quelconque paquet de données à latence contrainte dans l'implémentation précédente des moyens d'allocation.

14. Programme d'ordinateur **caractérisé en ce qu'**il comprend des instructions de code de programme qui peuvent être chargées dans un dispositif programmable pour implémenter le procédé selon l'une quelconque des revendications 1 à 12, lorsque les instructions de code de programme sont exécutées par le dispositif programmable.

15. Moyens de stockage d'informations, **caractérisés en ce qu'**ils stockent un programme d'ordinateur **caractérisé en ce qu'**il comprend des instructions de code de programme qui peuvent être chargées dans un dispositif programmable pour implémenter le procédé selon l'une quelconque des revendications 1 à 12, lorsque les instructions de code de programme sont exécutées par le dispositif programmable.
